# EUROPEAN PATENT APPLICATION

(11) **EP 3 569 291 A2**
(43) Date of publication of application: **20.11.2019**
(21) Application number: 19174625.4
(22) Date of filing: 15.05.2019
(51) Int. Cl.: A62C 3/16, A62C 3/07, H01M 2/10

(54) **FIRE EXTINGUISHING SYSTEM FOR ACCUMULATORS**

(30) Priority: 15.05.2018 GB 201807848
(71) Applicant: Ryman, Michael, Teignmouth, Devon TQ14 9SF (GB); Ryman, Matthew, Torquay, Devon TQ2 6LW (GB)
(72) Inventor: Ryman, Michael, Teignmouth, Devon TQ14 9SF (GB); Ryman, Matthew, Torquay, Devon TQ2 6LW (GB)
(74) Representative: Bryers LLP

(57) **Abstract**

A fire extinguishing system for a battery is provided and comprises extinguishant delivery means pre-installed in the vicinity of the battery.

## Description

The present invention relates generally to a fire extinguishing system and particularly, although not exclusively, to a close protection fire extinguishing system suitable for batteries, such as lithium ion batteries.

Batteries, such as lithium-ion batteries are increasingly common for energy storage. With energy storage comes the potential for inadvertent energy release under abnormal conditions.

In relation to vehicles, for example, consumers have grown comfortable with the safety risk associated with petrol/diesel engines, even though they present an inherently high energy safety risk. However, electric vehicles powered by Li-lon battery packs are newer and not so well understood.

Although relatively uncommon, lithium Ion thermal runaway is a complex combination of chemical reactions and/or shorts that can occur inside a Li-Ion cell, initiated by excessive heat from inside or outside the cell. It is not a classic electrical fire. The chemical reactions generate additional heat which causes a positive feedback cycle to intensify the heat until there are no reactive agents left within the cell. Furthermore, access to the area of electric vehicles which hold the batteries is often restricted, making it difficult for emergency services to completely extinguish a fire.

One aspect relates to a close protection fire sprinkler system for batteries (for example a container comprising one or more cells in which chemical energy is converted into electricity and used as a source of power.), such as lithium ion batteries.

At least some of the components of the system are pre-installed. In particular onboard means for the final delivery of extinguishant directly onto the battery are provided.

In some embodiments an onboard reservoir of extinguishant is provided. Alternatively or additionally an inlet for pumping in extinguishant can be provided to receive extinguishant.

In some embodiments a fire suppressor is added. An onboard reservoir of suppressor may be provided. Alternatively or additionally suppressor may provided by attendants at the point of use.

In one aspect the present invention relates to an electric vehicle safety system, in which one or more extinguishant outlets are permanently located in the vicinity of the vehicle battery/ies. The outlet/s therefore lead directly to the battery area. The system further comprises conduit/s such as pipework which feeds the outlet/s. In some embodiments the system includes one or more extinguishant inlet points into which extinguishant can be fed in the event of a fire in the vehicle, in particular a fire involving the (e.g. lithium ion) batteries. In use extinguishant can be fed into the inlet/s to pipe it directly to the batteries.

In some embodiments the outlets are formed as part of a manifold unit. The manifold unit may be movable, for example the manifold may swivel/sweep up/down/left/right across the battery/battery compartment is use, for example caused by the introduction of pressurised extinguishant.

The system may comprise an inlet. The inlet may be adapted or adaptable to receive fluid from a hose, such as a fire service hose.

Some embodiments provide or relate to a system for protection against fire by means of pipes which convey an extinguishing fluid to outlets.

In some embodiments the extinguishing fluid is carrier onboard, or provided locally for example in a tank or other vessel. In some embodiments the fluid is generated, made or sourced separately, for example contemporaneously, to avoid the need to carry the fluid.

In some embodiments the system includes and inlet for receiving extinguishing fluid from an external source. For example, an inlet couplable to a fire hose.

The system may comprise means for allowing a hose to be locked/held in position. The hose can be fitted and then personnel can move away.

An example of an extinguishant which may be useful for use on Li-Ion battery fires is the fire suppressor F-500, produced by Hazard Control Technologies, Inc. F500, or other fire suppressants, can be added to water at the point of use.

Fire suppressant may, for example, be added at a concentration in the range 3%-5%.

In some embodiments a quantity of fire suppressing additive is provided with or associated with the system. In one embodiment, for example, a small reservoir of fire suppressant is provided as part of the system. When water is fed into the inlet's it is automatically mixed with the suppressant and sprayed onto the fire internally i.e. the suppressant/water mix is not indiscriminately sprayed on from outside the vehicle but rather is sprayed or otherwise applied directly to the fire. Alternatively or additionally such a fire suppressant/water mix could be fed into the inlet/s by emergency services.

Some aspects and embodiments of the present invention are provided as a fire safety device fitted or fittable, for example, to an electric vehicle or lithium ion battery system which will be effective in suppressing and extinguishing a fire.

A close coupled system may be provided in the form of an arrangement of tubing networks which enable fire suppressing liquid appropriate for a lithium ion battery fire to be applied in close proximity to the failing battery.

In some embodiments a fire alert means is provided. Some embodiments include an unpowered alert means. One non-limiting example of a fire alert means is described in GB2515579 (hereby incorporated by reference).

The exhaust side of the network may contain a smoke detecting valve, such as the D.U.C.K. Valve described in GB2515579 which detects umbrosic carbon kinesis and will give off an audible sound if the lithium ion battery begins to catch fire or smoulder.

This audible device will not cease sounding until all smoke induction exhaust gases cease to flow.

This is an early and late warning mechanism which makes this device unique.

The application of a suitable battery fire extinguishant may be applied into an intake tubing in order to suppress and extinguish the battery fire.

One or more sprinkler head nozzles, such as close coupled spray nozzle/s, may be provided and may be capable of delivering both mist and jet sprays.

A perturbation actuator may be provided to break up the intake water liquid flow into a coalesced yet fragmented volume which prevents electrical discharge from the battery circuits back to the extinguishing supplier. The electrical conducting path is severely inhibited in order to prevent electrical shocks.

The device may be configured for use with the addition of an aliphatic surfactant designed for the purpose mixed with the intake water at inception through an induction chamber (for example supplied to the fire service) so that the volume of water necessary for extinguishment is greatly reduced and rapid cooling is achieved.

In some embodiments any type of large battery storage system where lithium ion is the means of supply for electricity can have this apparatus fitted as a first line of defence against fire. Such usage may be within any electric vehicle or electrically powered ship, boat or train. The device may be used, for example, within a factory where robotic functions are deemed essential.

In some cases a supply of the mixed extinguishment can be stored onboard the vehicle or vessel if required for an immediate application to control the fire progress.

Some aspects and embodiments include a liquid perturbation actuator to prevent electrical feed-back to any hose lines and operatives using them.

It should be noted that whilst some embodiments may relate to Lithium-Ion batteries, other embodiments relate to systems adapted for or suitable for other battery types, the principle being that extinguishant can be supplied directly to the vicinity of the batteries in the event of a battery fire.

In some embodiments the system is active i.e. it automatically detects a fire and/or initiates deployment of fire extinguishant.

In other embodiments the system is "dumb" i.e. it provides the conduit for extinguishant to be sent to the fire.

Some aspects and embodiments provide or relate to a close protection fire sprinkler system for lithium ion batteries. Close protection fire extinguishment may be necessary for lithium ion batteries because thermal runaway is difficult to access by any other means.

Water alone does not achieve the high degree of fire degradation when it initiates suppression. This may occur most effectively when a micelle encapsulating agent is added to the water as a soluble mixture.

The combination mixture needs to be applied in close proximity to the batteries which have ignited. The mixture needs to be applied under pressure in order to penetrate the batteries outer casing through the failing sections.

A series of sprinkler heads may be provided at close proximity to the batteries and only operate liquid expression under controlled conditions. This is known as Electro-Fire-Knockdown (EFK).

A valve may be fitted within the exhaust ducting of the close protection sprinkler system.

Included in the system may be a device which detects umbrosic carbon kinesis. This device activates only when carbon emissions pass through it. It may provide three methods of warning: electrical, audible and visual.

Included in the system may also be a liquid perturbation actuator to prevent electrical feed-back to any hose lines and operatives using them.

This type of extinguishing method/system/device may be applicable wherever electrical power use is provided by lithium ion batteries.

Good examples are for use in electric vehicles such as cars, or for maritime power storage such as for battery racks for electrical power in shipping vessels. Sea water may, for example, be used as an extinguishant, possibly in combination with a fire suppressor.

Cargo holds in aircraft, trains and heavy goods vehicles may be other areas of use.

In some embodiments a close protected sprinkler head manifold may be provided. Spraying nozzles may be inserted in the outlet side of the sprinkler head manifold.

Water and an aliphatic surfactant additive may be provided or used as part of the present invention.

Some embodiments may comprise electronic controls with a battery back-up.

Some embodiments may comprise a suppressant/water mixer unit.

Some embodiments may comprise a fire suppressant container vessel.

Some embodiments may comprise or include a close protection fire sprinkler system.

The system may comprise a sprinkler head device.

A locking device, for the safe insertion of the supply of the extinguishing liquid into a battery environment (such as electric vehicle) may be provided. The device may have a hexagonal shape or other such configuration for receiving the adapted hosing as used by the Fire Service. This may be located at the point/s of entry where fire service personnel apply direct infusion of the liquid.

This enables the fire service to apply the supply of liquid at a suitable pressure and retreat from the immediate vicinity of the burning environment (building, room, vehicle, vessel) if necessary.

The inserted hose end may be clamped in position until a suitable safe moment to release and to cease the application of the extinguishing liquid.

Examples of uses of aspects and embodiments of the present invention include:
Vehicles
Cars
Buses
Motorbikes
Trains Yachts
Boats
Planes
Domestic usage
Dwellings
Factories
Offices

Different aspects and embodiments may be used together or separately.

The present invention is more particularly shown, by way of example, with in the accompanying drawings.

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

The figures are not necessarily drawn to scale, and in some instances the drawings may have been exaggerated or simplified for illustrative purposes only. One of ordinary skill in the art will appreciate the many possible applications and variations of the present invention based on the following examples of possible embodiments of the present invention.

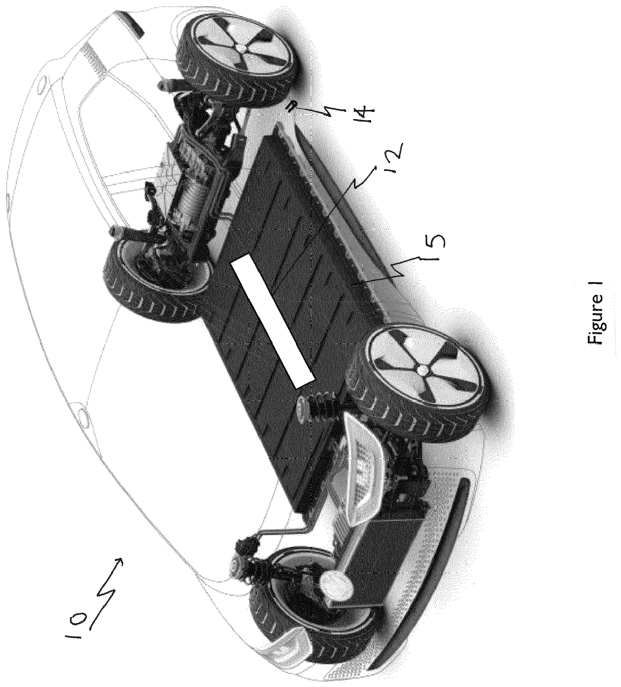

Referring first to Figure 1 there is shown a representation of an electric vehicle 10. The vehicle 10 has a plurality of battery cells 15. It will be noted that the cells 15 are positioned in the floor of the vehicle, often in a sealed compartment, and accordingly access is restricted.

If the battery catches fire the fire safety system of the present invention can be used.

At least some of the components of the system are pre-installed. In particular onboard means for the final delivery of extinguishant directly onto the battery are provided, which in this embodiment comprises a sprinkler head 12.

In some embodiments an onboard reservoir of extinguishant is provided. Alternatively or additionally an inlet 14 for pumping in extinguishant can be provided to receive extinguishant and onwardly to the head 12.

In some embodiments a fire suppressor is added. An onboard reservoir of suppressor may be provided. Alternatively or additionally suppressor may provided by attendants at the point of use.

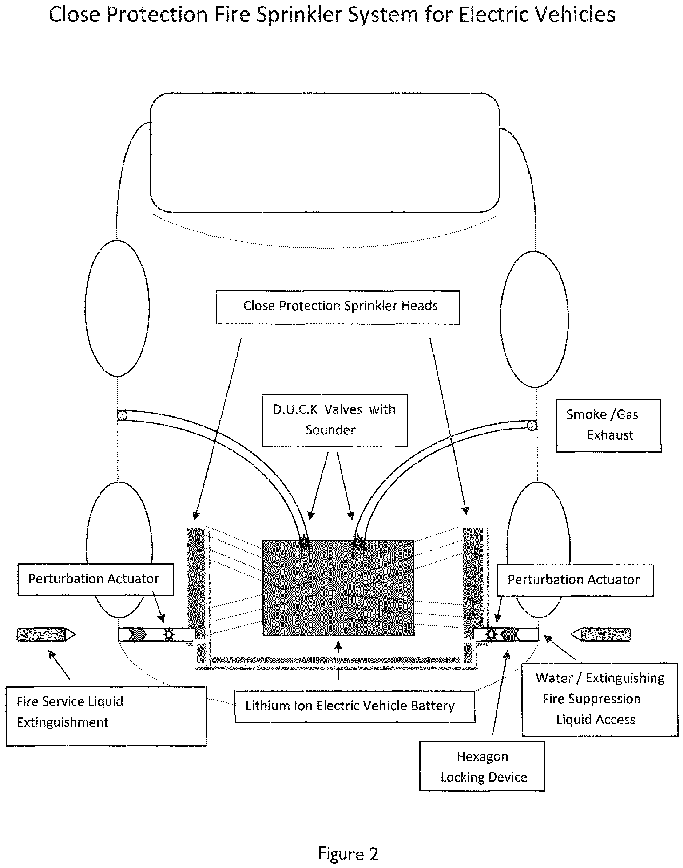

Referring now to Figure 2 there is shown a close protection fire sprinkler system for batteries (for example a container comprising one or more cells in which chemical energy is converted into electricity and used as a source of power.), such as lithium ion batteries.

Close protection fire extinguishment is necessary, for example, for lithium ion batteries because thermal runaway is difficult to access by any other means.

The sprinkler system of this embodiment is a safety features for extinguishing a battery fire.

The system comprises:
- one or more (two in this embodiment) alert means, which in this embodiment is a sounder.
- one or more (two in this embodiment) exhaust lines
- one or more (two in this embodiment) manifolds
- one or more (two in this embodiment) inlets for extinguishant

When lithium ion batteries are damaged or break down the cells go into thermal runaway and a continuous heat eruption follows. There are very few means of extinguishment, except, for example, total water saturation to cool and knock down the fire.

The system allows the application of extinguishant via pre-installed means. In this embodiment application is extinguishant is through access inlet channels. These can be fed by fire service hoses.

A mixture of, for example, 3-5% fire suppressant may be applied with water on a continuous or discontinuous basis.

Water alone often does not achieve the high degree of fire degradation when it initiates suppression. This occurs most effectively when a micelle encapsulating agent is added to the water as a soluble mixture.

This combination mixture needs to be applied in close proximity to the batteries which have ignited. The mixture needs to be applied under pressure in order to penetrate the batteries outer casing through the failing sections. The mixture enables the water molecules to encapsulate the heated fuel molecules and saturate them into a cool status.

The ensuing smoke and steam is evacuated via the exhaust outlets. An indication of status of the gas density and volume may be used to determine safe extinguishment.

In this embodiment a series of sprinkler heads are provided at close proximity to the batteries and only operate liquid expression under controlled conditions. This is known as Electro-Fire-Knockdown (EFK).

This valve is fitted within the exhaust ducting of the close protection sprinkler system.

Included in this system are the sounder devices which detect umbrosic carbon kinesis. The devices activate only when carbon emissions pass through it. It provides three methods of warning, electrical, audible and visual. The device/s may provide an early warning that the battery is on fire and urgent action is required. It can also indicate in visual and audible form when extinguishment is completing/completed.

Included in this system is also a liquid perturbation actuator to prevent electrical feed-back to any hose lines and operatives using them.

This type of extinguishing method is applicable wherever electrical power use is provided by batteries, such as lithium ion batteries.

Good examples are for use in electric cars - battery racks for electrical power in shipping vessels. Cargo holds in aircraft, trains and heavy goods vehicles are other areas of use.

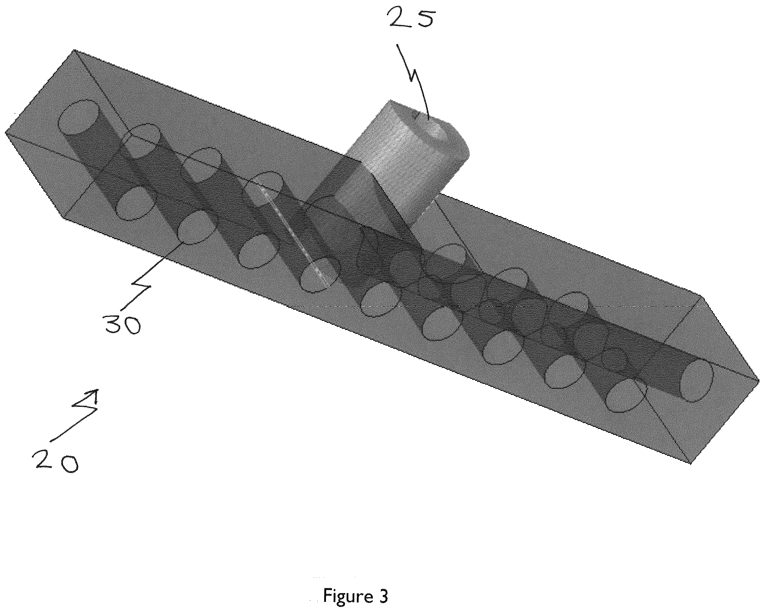

Figure 3 shows a close protected sprinkler head manifold 20. The manifold 20 comprises an inlet 25 and a plurality of outlets 30.

The manifold may utilise water and aliphatic surfactant additive.

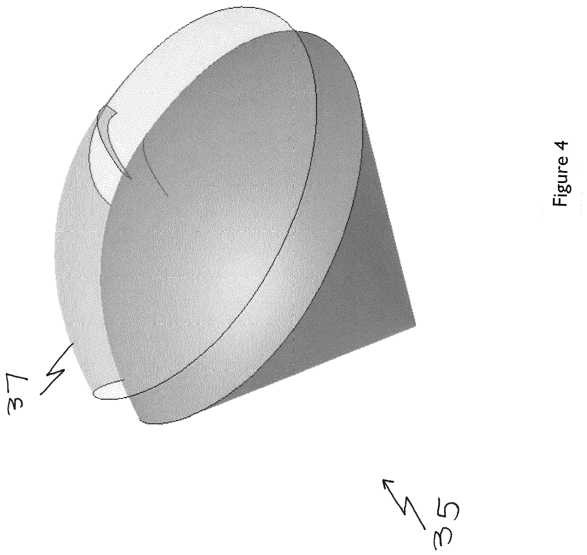

Close coupled spraying nozzle are inserted in the outlet side of the sprinkler head manifold. An example of a nozzle 35 is shown in Figure 4. The nozzles can provide a jet stream and/or a mist stream (from under a canopy 37).

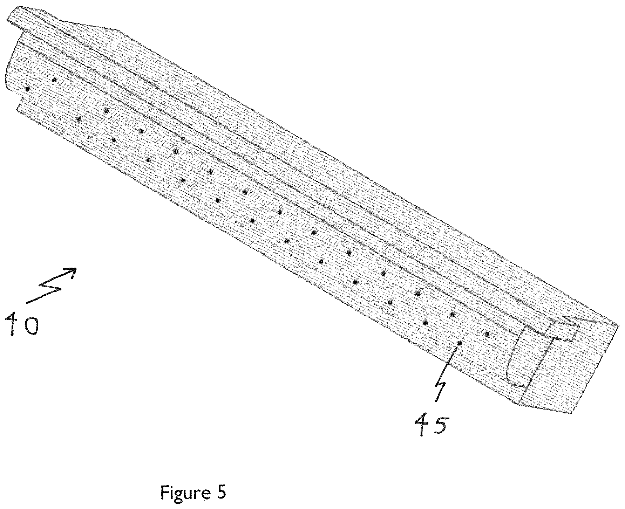

The manifold may be fitted with a cover 40, such as that shown in Figure 5. The cover 40 includes a plurality of outlets 45 corresponding to the manifold outlets 30.

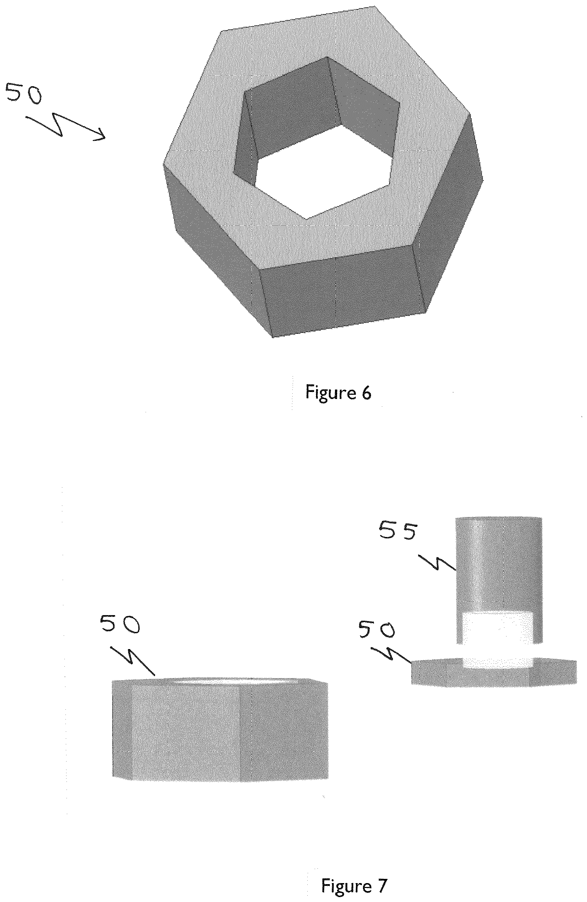

Figure 6 shows a locking device 50, for the safe insertion of the supply of the extinguishing liquid into an electric vehicle. The device 50 has a hexagonal shape to receive the adapted hosing as used by the Fire Service or other attendant.

The device 50 is located at the points of entry where fire service personnel apply direct infusion of the liquid.

This enables the fire service to apply the supply of liquid at a suitable pressure and retreat from the immediate vicinity of the burning vessel if necessary.

As shown in Figure 7 the inserted hose end 55 is clamped in position until a suitable safe moment to release and to cease the application of the extinguishing liquid.

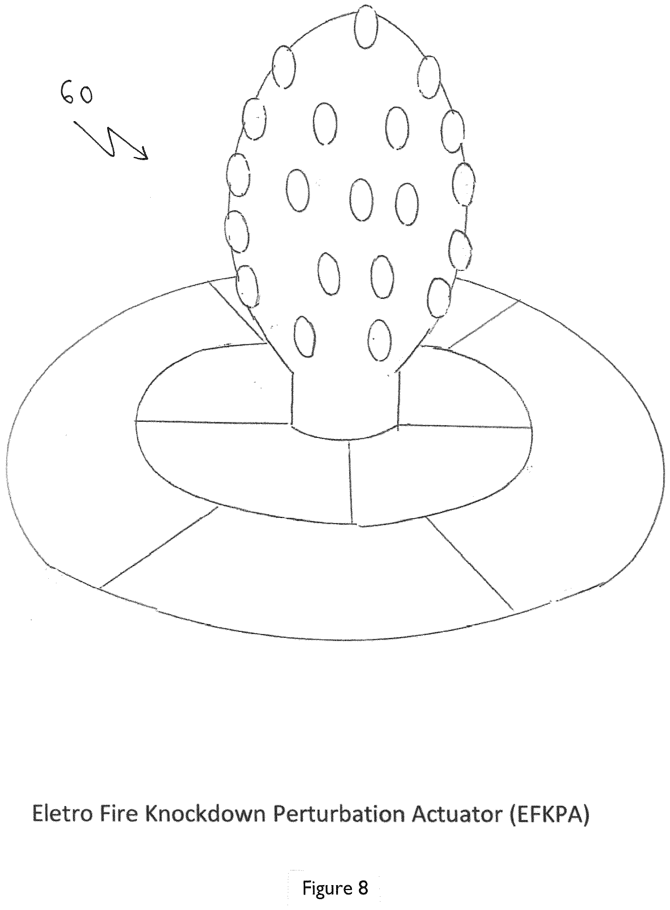

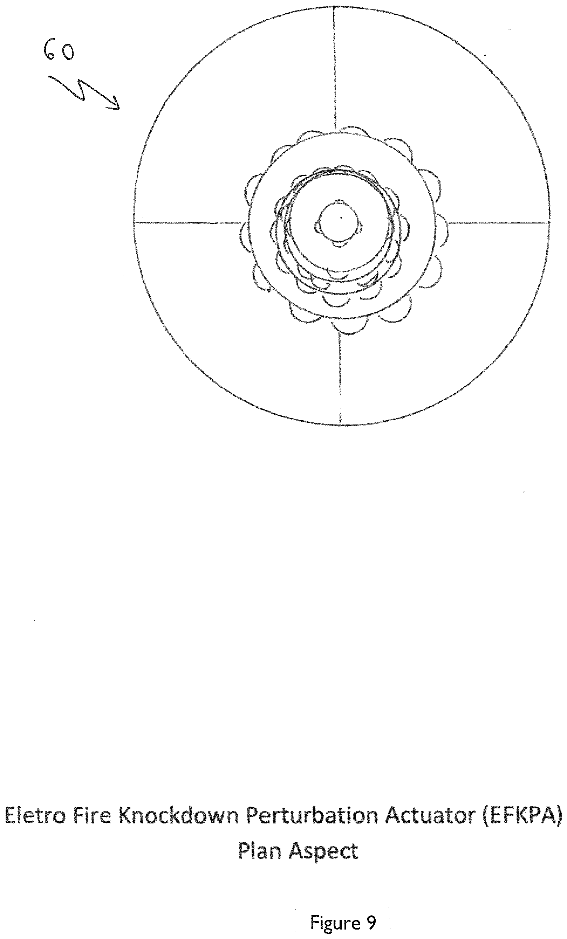

Figures 8 and 9 show a perturbation actuator 60 formed in accordance with the present invention. The actuator is provided to prevent electrical feedback to hose lines and operatives.

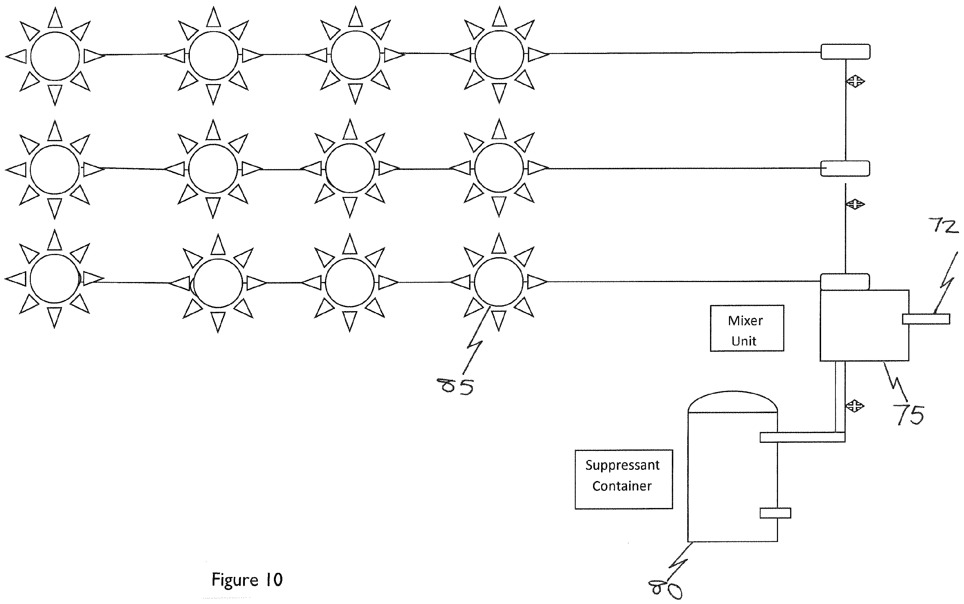

Figure 10 illustrates a close protection sprinkler system 70 formed in accordance with an aspect of the present invention.

The system 70 includes:
- inlet 72 (for example for water)
- electronic controls with battery back-up
- suppressant/water mixer unit 75
- fire suppressant container vessel 80
- a plurality of sprinklers 85

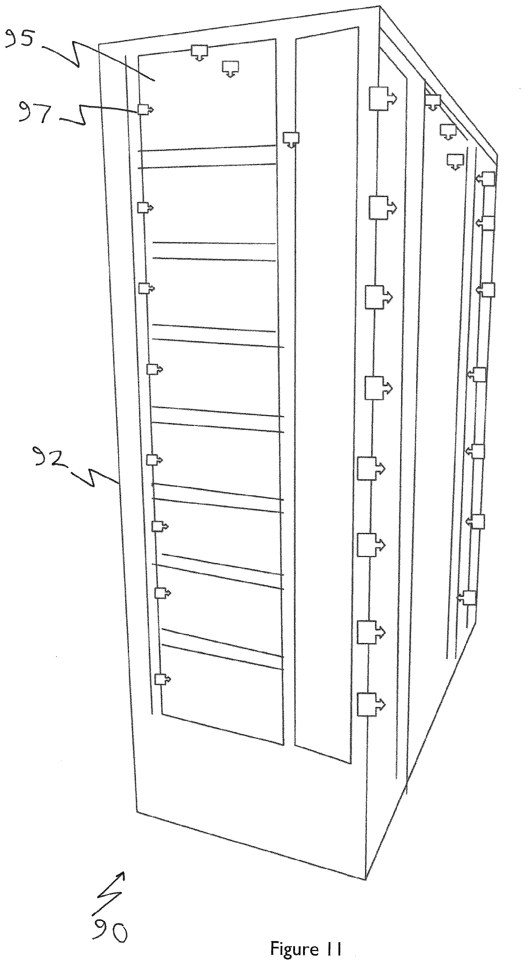

Figure 11 illustrates a close protected sprinkler system 90 for lithium ion batteries applicable for maritime power storage. The battery cells 95 are provided in a case/cupboard/housing 92. A plurality of sprinklers 97 are pre-installed in the vicinity of the cells. In the event of a fire the sprinklers can be fed water (e.g. from a store or from a fire hose). Fire suppressing additive may be provided locally or when liquid is fed into the sprinkler head system.

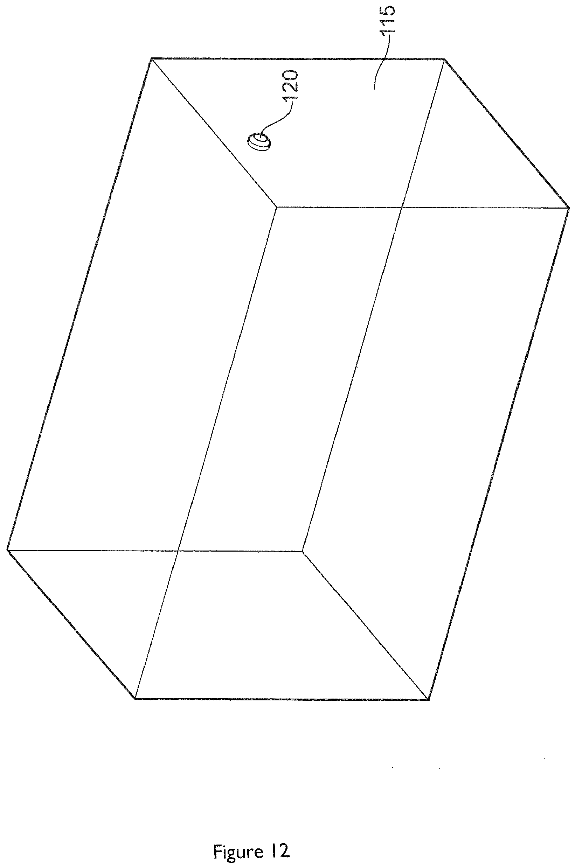

Figure 12 shows an example of a fire detection device 120 comprising a body positionable to receive a flow of hot gas from a fire in a battery compartment 115, the body comprising an indicator means for signalling existence of the fire, the indicator means being drivable by the flow of hot gas passing through the body.

One end of the device 120 is open to the interior of the compartment. The other end of the device is open to the exterior of the compartment and comprises a sounder which in this embodiment has a tuned mechanical section designed to emit an audible sound when gas passes through it.

The device itself is unpowered. In some embodiments power may be generated by the passage of gas through the body for example by providing an impeller. This power could, for example, be used for further functionality such as providing location and/or sending warnings to remote locations.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention.

## Claims

1. A fire extinguishing system for a battery, comprising extinguishant delivery means pre-installed in the vicinity of the battery.

2. A close protection fire sprinkler system for a battery comprising onboard means for the delivery of extinguishant directly onto/into the battery.

3. An electric vehicle safety system, in which one or more extinguishant outlets are permanently located in the vicinity of the vehicle battery/ies.

4. A system as claimed in any preceding claim, in which an inlet for receiving extinguishant is provided.

5. A system as claimed in any preceding claim, in which a fire suppressor additive is provided.

6. A system as claimed in any preceding claim, in which the system further comprises conduit/s, such as pipework, which feeds extinguishant outlet/s.

7. A system as claimed in any preceding claim, in which the system includes one or more extinguishant inlet points into which extinguishant can be fed in the event of a fire.

8. A system as claimed in any preceding claim, in which the inlet is adapted or adaptable to receive fluid from a hose.

9. A system as claimed in claim 8, in which the system comprises means for allowing a hose to be locked/held in position.

10. A system as claimed in any preceding claim, in which one or more extinguishant outlets are formed as part of a manifold unit.

11. A system as claimed in claim 10, in which spraying nozzles are provided in the outlet side of a sprinkler head manifold.

12. A system as claimed in claim 11, in which the nozzles are capable of delivering a mist and/or jet spray.

13. A system as claimed in any preceding claim, in which a fire alert means is provided.

14. A system as claimed in any preceding claim, further comprising a perturbation actuator for breaking up intake liquid flow into a coalesced yet fragmented volume which prevents electrical discharge from the battery circuits back to the extinguishing supplier.

15. A system as claimed in any preceding claim for lithium-ion batteries.
